# EUROPÄISCHE PATENTSCHRIFT

(11) **EP 4 181 086 B1**
(45) Veröffentlichungstag und Bekanntmachung des Hinweises auf die Patenterteilung: **25.09.2024**
(21) Anmeldenummer: 21208496.6
(22) Anmeldetag: 16.11.2021
(51) Int. Cl.: G06V 20/56, G06V 20/59, G06V 10/82, G06Q 10/00

(54) **ABFALLENTSORGUNGSSYSTEM UND VERFAHREN ZUR STÖRSTOFFDETEKTION IN ABFALLBEHÄLTERN**
WASTE DISPOSAL SYSTEM AND METHOD FOR DETECTING FOREIGN MATTER IN WASTE CONTAINERS
SYSTÈME D'ÉLIMINATION DES DÉCHETS ET PROCÉDÉ DE DÉTECTION DES MATIÈRES PERTURBATRICES DANS DES CONTENEURS À DÉCHETS

(43) Veröffentlichungstag der Anmeldung: 17.05.2023
(73) Patentinhaber: c-trace GmbH, 33605 Bielefeld Nordrhein-Westfalen (DE)
(72) Erfinder: Markworth, Cedric, 33602 Bielefeld (DE); Vogt, Stephan, 33818 Leopoldshöhe (DE)
(74) Vertreter: Ter Meer Steinmeister & Partner

(56) Entgegenhaltungen:
- US-A1- 2005 209 825
- US-A1- 2017 345 169
- US-A1- 2020 034 785

## Beschreibung

Die vorliegende Erfindung betrifft ein Abfallentsorgungssystem zur Störstoffdetektion in Abfallbehältern, gemäß dem Oberbegriff des Anspruchs 1, sowie ein entsprechendes Verfahren.

Effiziente Abfallentsorgungssysteme sind ein wesentlicher Bestandteil der Kreislaufwirtschaft. Es ist von großer Bedeutung, dass die entsorgten Abfälle in möglichst großem Umfang effizient wiederverwertet werden. Hierzu ist es erforderlich, verwertbare Inhaltstoffe des Abfalls von Störstoffen zu unterscheiden, die im Abfall enthalten sein können und diese voneinander sortenrein zu trennen.

Während man in der Vergangenheit überwiegend darauf angewiesen war, dass die Abfallerzeuger, z.B. Haushalte und Industriebetriebe, die Trennung des Abfalls in einzelne Inhalts- und Wertstoffe selbst vornehmen, sind seit einiger Zeit auch Systeme bekannt, in welchen der Abfall während der Entsorgung auf seine Inhaltsstoffe hin untersucht wird, so dass Fehlsortierungen erkannt werden können. Beispielsweise offenbart EP 3 553 698 A1 ein System zum Erfassen der Bestandteile des Abfalls, bei welchem ein Kamerasystem an dem Entsorgungsfahrzeug angebracht ist, in welches die einzelnen Abfallbehälter entleert werden. Dass Entsorgungsfahrzeug ist mit einer üblichen Einrichtung ausgestattet, die den Abfallbehälter in einer Aufnahmeposition aufnimmt und aus dieser in eine Entleerungsposition bewegt, in welcher der Inhalt des Behälters in einen Abfallsammelraum des Fahrzeugs gekippt wird. Das Kamerasystem umfasst drei unterschiedliche optische Aufnahmevorrichtungen: eine erste optische Aufnahmevorrichtung zur Aufnahme eines 2D-Farbbildes, eine zweite optische Aufnahmevorrichtung zur Aufnahme einer Mehrzahl von 2D-Spektralbildern und eine dritte optische Aufnahmevorrichtung zur Aufnahme eines 3D-Bildes. Durch eine Bildanalyse mittels eines neuronalen Netzwerkes ist es möglich, einzelne Bestandteile jedes geleerten Abfallbehälters zu erfassen und dazu zu nutzen, die Verarbeitung des Abfalls zu optimieren.

Nachteilig ist allerdings, dass bei diesem bekannten System die optische Analyse des Abfalls erst dann stattfindet, wenn der Inhalt des Abfallbehälters sich bereits im Abfallsammelraum befindet. Bilder des Abfalls werden erst angefertigt, nachdem der Abfall auf eine dazu vorgesehene Fläche im Fahrzeug verteilt wird. Dann kann zwar eine Fehlsortierung des betreffenden Abfallbehälters festgestellt werden, es ist jedoch nicht möglich zu verhindern, dass fehlsortierter Abfall in den Abfallsammelraum gelangt, z.B. durch einen Schüttungsstopp, der eine Entleerung rechtzeitig verhindert. Ferner ist es erwünscht, auf Umbauten des Entsorgungsfahrzeugs selbst weitgehend zu verzichten, wie etwa die bereits genannte Fläche, auf welcher der Inhalt des Abfallbehälters ausgebreitet werden muss. Schließlich ist es erwünscht, dass Abfallentsorgungssystem so zu gestalten, dass einzelnen Behältern eine Bewertung der Qualität des Abfalls zugeordnet wird und für das weitere Abfallmanagement ausgewertet wird, beispielsweise für Abrechnungszwecke oder andere personalisierte Maßnahmen, die unmittelbar an die Abfallverursacher adressiert sind, wie etwa Informations- oder Mahnschreiben.

Die Druckschrift US 2020/034785 A1 beschreibt ein computerimplementiertes Verfahren zum Analysieren von Müll umfassend Vorgänge zum Empfangen von Sensordaten, die einen Betriebszustand einer Fahrzeugkarosseriekomponente eines Müllsammelfahrzeugs (RCV) angeben; Analysieren der Sensordaten zum Erfassen eines Vorhandenseins einer Auslösebedingung basierend zumindest teilweise auf einem bestimmten Betriebszustand der Fahrzeugkarosseriekomponente, wie durch die Sensordaten angezeigt; als Reaktion auf das Erfassen der Auslösebedingung, Zugreifen auf Bilddaten, die einen physikalischen Zustand des von dem RCV gesammelten Mülls angeben; Bereitstellen der Bilddaten als Eingabe für mindestens ein Schadstofferkennungsmodell, das unter Verwendung mindestens eines Algorithmus für maschinelles Lernen (ML) trainiert wurde, um eine Klassifikation der Bilddaten auszugeben, wobei die Klassifikation einen Verschmutzungsgrad des Abfalls angibt; und Speichern der Klassifizierung der Bilddaten in einem maschinenlesbaren Medium.

Die Druckschrift US 2017/345169 A1 offenbart ein System zum Auditieren von durch ein Servicefahrzeug abgeholtem Abfall. Das System kann einen optischen Sensor aufweisen, der an Bord des Servicefahrzeugs montierbar und dazu konfiguriert ist, Bilddaten zu erfassen, die dem Abfall zugeordnet sind, wenn der Abfall während des Abschlusses einer Abfallserviceaktivität in das Servicefahrzeug fällt. Das System kann auch mindestens eine Steuerung aufweisen, die mit dem optischen Sensor kommuniziert und dazu konfiguriert ist, mindestens einen Alarm und/oder eine Empfehlung bezüglich einer Mischung des Abfalls basierend auf den Bilddaten zu erzeugen.

Die Druckschrift US 2005/209825 A1 offenbart ein Abfallmanagement-System unter Einsatz von Barcode-Markierungen, die an den zu leerenden Abfallbehältern angebracht sind.

Es ist daher eine Aufgabe der vorliegenden Erfindung, ein Abfallentsorgungssystem und ein entsprechendes Verfahren zu schaffen, in welchem eine möglichst frühzeitige individuelle Kontrolle der Abfallqualität der einzelnen Abfallbehälter durchgeführt werden kann, noch bevor deren Inhalt in den Abfallsammelraum des Entsorgungsfahrzeugs gelangt, und die Genauigkeit der Erfassung von Störstoffen im Abfall zu steigern.

Diese Aufgabe wird erfindungsgemäß durch ein Abfallentsorgungssystem mit den Merkmalen des Anspruchs 1 sowie durch ein entsprechendes Verfahren mit den Merkmalen des Anspruchs 6 gelöst.

Das Kamerasystem des erfindungsgemäßen Abfallentsorgungssystems umfasst eine erste Kamera und eine zweite Kamera mit unterschiedlichen Funktionen. Die erste Kamera dient zur Aufnahme zumindest eines Bildes des Inhalts des Abfallbehälters, bevor dieser entleert wird, in einer Draufsicht. Die zweite Kamera dient dazu, eine Folge von Bildern des Inhalts des Abfallbehälters aufzunehmen, während dieser entleert wird. Während die erste Kamera also den Inhalt des Abfallbehälters statisch darstellt, kann die zweite Kamera diesen dynamisch während der Schüttung in den Abfallsammelraum aufnehmen, nämlich als Bildfolge oder Videosequenz. Eine Datenverarbeitungseinheit dient zur Analyse der Bilder der ersten Kamera und/oder der zweiten Kamera. Diese Analyse umfasst eine Klassifizierung der Bilder nach Inhaltsstoffen mittels eines neuronalen Netzwerks.

Auf diese Weise ist es möglich, Inhaltsstoffe des Abfalls mit Hilfe der ersten Kamera noch vor der Entleerung zu erkennen und gegebenenfalls Störstoffe, d.h. unerwünschte Inhaltsstoffe, die nicht korrekt einsortiert sind, von erlaubten, d.h. korrekt einsortierten Inhaltsstoffen zu unterscheiden und gegebenenfalls Maßnahmen zu ergreifen, die eine Entleerung des Inhalts in den Abfallsammelraum verhindern. Aufgrund der automatischen Analyse kann diese Erkennung von Störstoffen ohne die Beobachtung und den Eingriff einer Bedienungsperson durchgeführt werden. Erfindungsgemäß wird automatisch ein Schüttungsstopp durchgeführt, wenn aufgrund der Analyse eines Bildes der ersten Kamera die Überschreitung eines bestimmten Störstoffanteils im Abfall erkannt wird. Daraufhin wird ein entsprechendes Warnsignal ausgegeben. Eine Kontamination des bereits im Abfallsammelraum befindlichen Abfalls kann auf diese Weise verhindert werden.

Ist dies nicht der Fall, so kann ein Störstoff gegebenenfalls durch die zweite Kamera während der Schüttung erkannt werden, d.h. während der Abfall in den Abfallsammelraum fällt. Auch wenn eine Kontaminierung des bereits im Abfallsammelraum befindlichen Abfalls dann nicht mehr verhindert werden kann, so kann der Störstoffanteil innerhalb des Abfallsammelraums berechnet oder geschätzt werden und es kann zumindest verhindert werden, dass der insgesamt kontaminierte Abfall innerhalb eines Entsorgungsfahrzeugs in den weiteren Abfallkreislauf gelangt. Eine Kombination des Einsatzes der ersten Kamera und der zweiten Kamera kann somit die Recyclingqualität und die Recyclingquote verbessern.

Als neuronales Netzwerk kann beispielsweise ein trainiertes "Convolutional Neural Network" (kurz: CNN) verwendet werden. Dieses kann die Klassifizierung eines Bildes anhand von Bildmerkmalen vornehmen, wobei es im Rahmen der vorliegenden Erfindung genügen kann, ein Bild danach zu klassifizieren, ob es einen Störstoff enthält oder nicht. Eine genauere Klassifikation, etwa die Erkennung der genauen Art des Störstoffs (etwa: "PVC") und eine entsprechende Zuordnung danach oder zu einer bestimmten Störstoffklasse (hier etwa: "Kunststoffe") ist denkbar, jedoch nicht unbedingt notwendig. Ebenso wenig muss ein konkreter Gegenstand (etwa: eine Getränkedose) erkannt und identifiziert werden.

Erfindungsgemäß ist die Datenverarbeitungseinheit dazu eingerichtet, die Bilder danach zu klassifizieren, ob ein Bild mindestens einen Störstoff enthält oder nicht und dann, wenn ein Störstoff enthalten ist, den Abfallbehälter, dessen Inhalt abgebildet ist, als kontaminiert zu erkennen.

Ferner ist die Datenverarbeitungseinheit erfindungsgemäß dazu eingerichtet, im Fall der Erkennung der Überschreitung eines bestimmten Störstoffanteils in einem kontaminierten Abfallbehälter aufgrund eines von der ersten Kamera aufgenommenen Bildes ein Signal an die Entleerungseinrichtung zu übermitteln, durch welches eine Bewegung dieses Abfallbehälters in die Entleerungsposition beendet oder verhindert wird. Auf diese Weise kann verhindert werden, dass der Inhalt eines kontaminierten Abfallbehälters in den Abfallsammelraum gelangt und den bereits gesammelten Abfall kontaminiert. Es wird somit ein Schüttungsstopp durchgeführt. Dieser kann auch durchgeführt werden, bevor die Bewegung des Abfallbehälters aus der Aufnahmeposition beginnt, d.h. bereits mit der Aufnahme des Abfallbehälters.

Somit ist die Datenverarbeitungseinheit erfindungsgemäß dazu eingerichtet, den Störstoffanteil des Inhalts eines kontaminierten Abfallbehälters zu ermitteln. Hierbei kann es sich um einen Volumenanteil dieses Inhalts handeln oder auch - unter Berücksichtigung der Klassifizierung des Störstoffs im Verhältnis zu den übrigen Inhaltsstoffen - um einen Gewichtsanteil. Diese Information kann gegebenenfalls dazu verwendet werden zu entscheiden, ob der Störstoffanteil einen bestimmten Grenzwert überschreitet und nur dann, wenn dieser Grenzwert überschritten wird, ein entsprechendes Warnsignal, eine Meldung oder dergleichen zu generieren. Ein solches Signal kann auch dazu verwendet werden, den oben beschriebenen Schüttungsstopp durchzuführen, d.h. nur bei Überschreitung eines vorbestimmten Störstoffanteils in einem Abfallbehälter wird eine Entleerung desselben in den Abfallsammelraum verhindert.

Gemäß einer weiteren bevorzugten Ausführungsform ist die Datenverarbeitungseinheit dazu eingerichtet, aus den ermittelten Störstoffanteilen bereits erfolgter Leerungen mehrerer Abfallbehälter einen kumulierten Störstoffanteil des Inhalts des Abfallsammelraums zu ermitteln. Bei dieser Ausführungsform können z.B. die von der zweiten Kamera aufgenommenen Bilder des Inhalts des Abfallbehälters während der Entleerung zur Ermittlung des Störstoffanteils des Inhalts eines individuellen Abfallbehälters dienen. Dies kann zu genaueren Ergebnissen führen, da der Inhalt des Abfallbehälters während der Entleerung vollständig durch das Blickfeld der zweiten Kamera fallen kann, was bei der ersten Kamera nicht der Fall ist. Auch wenn ein Schüttungsstopp eines individuellen Abfallbehälters nicht mehr durchgeführt werden kann, ist die Ermittlung eines kumulierten Störstoffanteils im Entsorgungsfahrzeug sinnvoll, um die Sortenreinheit und somit die Qualität des gesammelten Abfalls zu beurteilen. In Abhängigkeit von der ermittelten Qualität können dann unterschiedliche Maßnahmen durchgeführt werden. Beispielsweise kann dem Fahrer eines Entsorgungsfahrzeugs dann, wenn der kumulierte Störstoffanteil einen Grenzwert überschreitet, signalisiert werden, dass eine andere Verwertungsstelle vom Entsorgungsfahrzeug angesteuert werden soll als ursprünglich vorgesehen.

Dies soll anschaulich am Beispiel der Entsorgung von Bioabfall erläutert werden. Kompostierbarer Abfall ist hierbei allgemein ein erwünschter Inhaltsstoff, während andere, nicht kompostierbare Anteile, wie insbesondere Kunststoff, Metall usw. unerwünschte Störstoffe sind. Wird somit anhand der Bilder der ersten Kamera in der Draufsicht erkannt, dass in einem Abfallbehälter ein Störstoff wie z.B. Metall oder Kunststoff enthalten ist, zumindest in einem nicht vertretbaren Ausmaß, so wird dieser Abfallbehälter als kontaminiert erkannt. Ist dies bereits aufgrund von Bildern der ersten Kamera der Fall, kann ein Schüttungsstopp eingeleitet werden, so dass verhindert wird, dass der kontaminierte Abfall zum bereits im Abfallsammelraum gesammelten Abfall bereits erfolgter Leerungen gelangt. Erfolgt diese Erkennung erst anhand von Bildern der zweiten Kamera, d.h. während der Entleerung, kann aufgrund dieser Bilder der Störstoffanteil qualitativ genauer bestimmt werden, und aufgrund der insgesamt erfolgten Leerungen mehrerer Abfallbehälter kann der kumulierte Störstoffanteil im Abfallsammelraum und somit die Abfallqualität in Bezug auf eine mögliche Wiederverwertung ermittelt werden.

Gemäß einer weiteren bevorzugten Ausführungsform der vorliegenden Erfindung ist die Datenverarbeitungseinheit dazu eingerichtet, aus dem Anteil der Leerungen kontaminierter Abfallbehälter an der gesamten Anzahl bereits erfolgter Leerungen einen kumulierten Störstoffanteil des Inhalts des Abfallsammelraums zu ermitteln. Bei dieser Ausführungsform beruht die Ermittlung des kumulierten Störstoffanteils also auf dem zahlenmäßigen Anteil der kontaminierten Leerungen an der Gesamtzahl. Beispielsweise kann dann, wenn eine bestimmte Anzahl kontaminierter Leerungen erfolgt ist, bestimmt werden, dass der Kontaminationsgrad des Inhalts des Abfallsammelraums so hoch ist, dass er einer gesonderten Entsorgung zugeführt werden muss. In diesem Fall kann wiederum ein entsprechendes Warnsignal an die Besatzung des Entsorgungsfahrzeugs ausgegeben werden.

Erfindungsgemäß umfasst das Entsorgungsfahrzeug Identifikationsmittel zur Ermittlung einer Kennung eines Abfallbehälters. Bei solchen Identifikationsmitteln kann es sich beispielsweise um eine Antenne zum Auslesen eines RFID-Transponders handeln, der am Abfallbehälter angebracht ist und dessen Identität bzw. die seines Eigentümers in kodierter Form enthält. Dieser Identifikationscode entspricht der Kennung, die von den Identifikationsmitteln ausgelesen wird. Auf diese Weise ist es möglich, jeden einzelnen Abfallbehälter zu identifizieren und seinem Eigentümer damit einem Abfallverursacher zuzuordnen.

Erfindungsgemäß umfasst das Entsorgungsfahrzeug ferner Mittel zur Ermittlung seines geografischen Standorts und zur Erzeugung entsprechender Standortdaten, und die Datenverarbeitungseinheit ist dazu eingerichtet, die Standortdaten mit der Kennung eines Abfallbehälters zu verknüpfen. Bei den Standortdaten kann es sich insbesondere um GPS-Daten handeln, welche die Position des Entsorgungsfahrzeugs genau wiedergeben. Die Verknüpfung mit der Kennung eines Abfallbehälters ermöglicht dann auch die Ermittlung der Position dieses Behälters, nämlich dann, wenn der Behälter mit dem Entsorgungsfahrzeug gekoppelt wird, also z.B. in die Aufnahmeposition der Entleerungseinrichtung des Fahrzeugs gelangt.

Erfindungsgemäß umfasst das Abfallentsorgungssystem ferner Mittel zur Kommunikation der Datenverarbeitungseinheit des Entsorgungsfahrzeugs mit einer zentralen Datenverwaltungseinheit, wobei die Datenverarbeitungseinheit dazu eingerichtet ist, Standortdaten und damit verknüpfte Kennungen von Abfallbehältern zusammen mit den jeweiligen Störstoffanteilen der Inhalte der Abfallbehälter an die zentrale Datenverwaltungseinheit zu senden. Gemäß einer bevorzugten Ausführungsform der Erfindung ist die zentrale Datenverwaltungseinheit dazu eingerichtet, eine geografische Dichteverteilung der Störstoffanteile zu ermitteln. Wie bereits erwähnt, kann eine Verknüpfung der Standortdaten mit den Kennungen der Abfallbehälter eine Information darüber vermitteln, welche Behälter sich in welcher Position befinden. Dies kann wiederum mit den Störstoffanteilen der Inhalte dieser Behälter verknüpft werden. Im Ergebnis kann die Datenverwaltungseinheit also ermitteln, welche Behälter mit welchen Störstoffanteilen sich an welchen Positionen innerhalb eines geografischen Raums befinden, also z.B. auch entlang des Fahrwegs des Entsorgungsfahrzeugs, welches entlang dieses Wegs die Entleerungen verschiedener Abfallbehälter nacheinander durchführt.

Die geografische Dichteverteilung der Störstoffanteile stellt eine Art "Heatmap" dar, die visualisiert, wie das Störstoffaufkommen räumlich verteilt ist. Diese Information kann beispielsweise dazu verwendet werden, geografische Problemzonen zu identifizieren und die Eigentümer der Abfallbehälter, d.h. die Abfallverursacher innerhalb dieser Zonen zu kontaktieren, etwa in Form von Informations- oder Mahnungsschreiben. Darüber hinaus ist es auch möglich, einzelne Abfallverursacher individuell zu kontaktieren. Dies wird dadurch möglich, dass Abfallbehälter mit zu hohem Störstoffanteil identifiziert werden. Der Störstoffanteil kann überdies in die Abrechnung der Abfallgebühren einbezogen werden.

Weiter vorzugsweise ist die Datenverwaltungseinheit zur Analyse von Bildern der ersten Kamera und/oder der zweiten Kamera eingerichtet, wobei diese Analyse eine Klassifizierung der Bilder nach erkannten Inhaltsstoffen mittels eines weiteren neuronalen Netzwerks umfasst. Dieses kann sich z. B. in Architektur und Ressourcenbedarf vom neuronalen Netzwerk der Datenverarbeitungseinheit des Entsorgungsfahrzeugs unterscheiden. Denkbar ist auch, dass das weitere neuronale Netzwerk der zentralen Datenverwaltungseinheit auf einen anderen, z.B. aktuelleren Satz von Trainingsdaten zurückgreift als das neuronale Netzwerk der Datenverarbeitungseinheit des Entsorgungsfahrzeugs oder Attribute aus anderen Quellen in die Entscheidung einbezieht. Die zusätzliche Analyse durch die zentrale Datenverwaltungseinheit dient zur Verifikation des Ergebnisses der Analyse durch die Datenverarbeitungseinheit des Entsorgungsfahrzeugs.

Die Erfindung betrifft ferner ein Verfahren zur Störstoffdetektion in Abfallbehältern, umfassend die folgenden Schritte:
- Aufnahme eines Abfallbehälters durch ein Entsorgungsfahrzeug in eine Aufnahmeposition,
- Ermittlung einer Kennung eines Abfallbehälters, durch welche der Abfallbehälter identifiziert wird, durch am Entsorgungsfahrzeug vorgesehene Identifikationsmittel, wobei die Kennung dazu eingerichtet ist, jeden einzelnen Abfallbehälter zu identifizieren und einem Eigentümer als Abfallverursacher zuzuordnen,
- Ermittlung des geografischen Standorts des Entsorgungsfahrzeugs und Verknüpfung von Standortdaten, die diesem geografischen Standort entsprechen, mit der Kennung eines Abfallbehälters,
- Aufnahme zumindest eines Bildes des Inhalts des Abfallbehälters in der Aufnahmeposition durch eine am Entsorgungsfahrzeug vorgesehene erste Kamera in einer Draufsicht,
- Bewegen des Abfallbehälters in eine Entleerungsposition, in welcher der Inhalt des Abfallbehälters in einen Abfallsammelraum des Entsorgungsfahrzeugs geleert wird, und Aufnahme einer Folge von Bildern des Inhalts des Abfallbehälters während der Entleerung durch eine am Entsorgungsfahrzeug vorgesehene zweite Kamera, die im Bereich der Entleerungseinrichtung unterhalb der Entleerungsposition angeordnet ist,
- Analyse der Bilder der ersten Kamera und/oder der zweiten Kamera durch eine Datenverarbeitungseinheit im Entsorgungsfahrzeug, umfassend eine Klassifizierung der Bilder nach Inhaltsstoffen mittels eines neuronalen Netzwerks, wobei die Bilder danach klassifiziert werden, ob ein Bild mindestens einen Störstoff enthält oder nicht, wobei dann, wenn ein Störstoff enthalten ist, der Abfallbehälter, dessen Inhalt abgebildet ist, als kontaminiert erkannt wird,
- Ermittlung eines Störstoffanteils des Inhalts eines kontaminierten Abfallbehälters durch die Datenverarbeitungseinheit aufgrund der Analyse der Bilder,
- im Fall der Erkennung der Überschreitung eines bestimmten Störstoffanteils in einem kontaminierten Abfallbehälters aufgrund eines von der ersten Kamera aufgenommenen Bildes: Übermittlung eines Signals an die Entleerungseinrichtung, durch welches eine Bewegung dieses Abfallbehälters in die Entleerungsposition beendet oder verhindert wird,
- Senden der Standortdaten und damit verknüpfter Kennungen von Abfallbehältern zusammen mit den jeweiligen Störstoffanteilen und Bildern der Inhalte der Abfallbehälter von der Datenverarbeitungseinheit an eine ortsfeste zentrale Datenverwaltungseinheit.

Erfindungsgemäß wird im Fall der Erkennung der Überschreitung eines bestimmten Störstoffanteils eines kontaminierten Abfallbehälters aufgrund eines von der ersten Kamera aufgenommenen Bildes eine Bewegung dieses Abfallbehälters in die Entleerungsposition beendet oder verhindert. Dies entspricht dem oben beschriebenen Schüttungsstopp, der verhindert, dass der Inhalt eines kontaminierten Abfallbehälters zu den Inhalten der bereits geleerten Abfallbehälter in den Abfallsammelraum des Entsorgungsfahrzeugs gelangt.

Hierbei wird der Störstoffanteil des Inhalts eines kontaminierten Abfallbehälters ermittelt. Hierbei kann es sich beispielsweise um einen Volumenanteil handeln oder auch um einen Gewichtsanteil. Diese Ermittlung kann auch eine Schätzung umfassen.

Vorzugsweise wird aus den ermittelten Störstoffanteilen bereits erfolgter Leerungen mehrerer Abfallbehälter ein kumulierter Störstoffanteil des Inhalts des Abfallsammelraums ermittelt. Hierbei kann ermittelt werden, ob der kumulierte Störstoffanteil einen Grenzwert überschreitet und im Fall einer solchen Grenzwertüberschreitung kann ein entsprechendes Signal an die Besatzung des Entsorgungsfahrzeugs ausgegeben werden.

Weiter vorzugsweise wird aus dem Anteil der Leerungen kontaminierter Abfallbehälter an der gesamten Anzahl bereits erfolgter Leerungen ein kumulierter Störstoffanteil des Inhalts des Abfallsammelraums ermittelt.

Bei der Kennung eines Abfallbehälters kann es sich beispielsweise um eine Identifizierung mittels eines RFID-Transponders handeln, wobei am Abfallbehälter ein entsprechender RFID-Transponder angebracht ist und am Entsorgungsfahrzeug eine Antenne zum Auslesen des Signals des RFID-Transponders vorgesehen ist.

Weiter vorzugsweise wird eine geografische Dichteverteilung der Störstoffanteile ermittelt.

Weiter vorzugsweise nimmt die zentrale Datenverwaltungseinheit eine Analyse der Bilder der ersten Kamera und/oder der zweiten Kamera mittels eines weiteren neuronalen Netzwerks vor, umfassend eine Klassifizierung der Bilder nach erkannten Inhaltsstoffen, um das Ergebnis der Analyse dieser Bilder durch das neuronale Netzwerk des Entsorgungsfahrzeugs zu verifizieren.

Das oder die Bilder wird bzw. werden auch abgespeichert, um als Nachweisführung für den Störstoff zu dienen.

Im Folgenden werden bevorzugte Ausführungsformen der vorliegenden Erfindung anhand der Zeichnung näher erläutert.
- Fig. 1: ist eine schematische Darstellung eines Entsorgungsfahrzeugs einer Ausführungsform des erfindungsgemäßen Abfallentsorgungssystems in einer Seitenansicht;
- Fig. 2: zeigt schematisch ein beispielhaftes Bild der ersten Kamera des Kamerasystems des Entsorgungsfahrzeugs aus Fig. 1;
- Fig. 3: ist eine weitere Ansicht des Entsorgungsfahrzeugs aus Fig. 1 in einer Entleerungsposition eines daran aufgenommenen Abfallbehälters; und
- Fig. 4: ist ein Ablaufdiagramm zur Darstellung einer Ausführungsform des erfindungsgemäßen Verfahrens unter Einsatz eines Entsorgungsfahrzeugs gemäß Fig. 1 und 3.

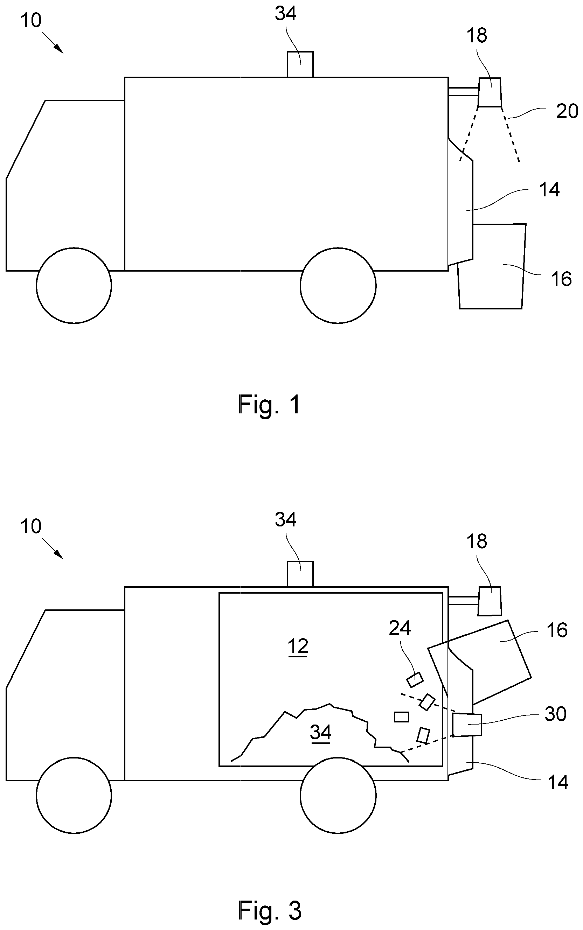

Das in Fig. 1 dargestellte Entsorgungsfahrzeug 10 ist Bestandteil eines erfindungsgemäßen Abfallentsorgungssystems zur Störstoffdetektion in Abfallbehältern. Das Entsorgungsfahrzeug 10 umfasst in seinem Inneren einen Abfallsammelraum 12 und an seinem Heck (in Fig. 1 rechts) eine Entleerungseinrichtung 14, die zur Aufnahme eines Abfallbehälters 16 und zum Bewegen desselben in eine Entleerungsposition eingerichtet ist. Fig. 1 zeigt die Aufnahmeposition des Abfallbehälters 16 in der Entleerungseinrichtung 14, in der der Abfallbehälter 16 in üblicher Weise mit seinem Rand an eine dafür vorgesehene Aufnahme wie z.B. einen Haken oder dergleichen der Entleerungseinrichtung 14 angehängt ist. Zum Bewegen des Abfallbehälters 16 aus dieser Aufnahmeposition (Fig. 1) in die Entleerungsposition (Fig. 3) umfasst die Entleerungseinrichtung 14 entsprechende Hubmittel, die z.B. mechanisch-hydraulisch betätigt werden können. Beispielhaft ist hier ein Entsorgungsfahrzeug 10 als Hecklader dargestellt, die Erfindung lässt sich jedoch ohne weitere auch an Seitenladern anwenden. Ferner können auch mehrere Entleerungseinrichtungen 14 für mehrere Abfallbehälter 16 vorhanden sein.

In der Aufnahmeposition in Fig. 1 steht der Abfallbehälter 16 im Wesentlichen senkrecht und ist geöffnet. Oberhalb des Abfallbehälters 16 ist eine erste Kamera 18 angeordnet, deren Blickfeld 20 nach unten weist, so dass der Innenraum des Abfallbehälters 16 erfasst wird. Auf diese Weise kann die erste Kamera 18 ein Bild des Inhalts des geöffneten Abfallbehälters 16 vor der Entleerung aufnehmen.

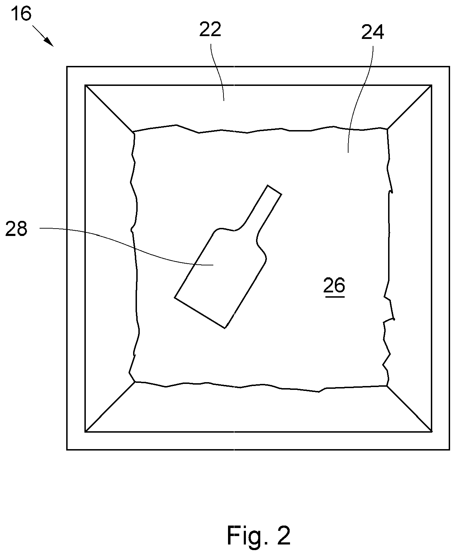

Ein solches Bild ist in Fig. 2 dargestellt. Im Innenraum 22 des Abfallbehälters 16 befindet sich Abfall, also ein Inhalt 24, der aus verschiedenen Inhaltsstoffen zusammengesetzt sein kann. Diese Inhaltsstoffe können in unterschiedliche Klassen eingeteilt sein, nämlich zumindest in erlaubte Inhaltsstoffe, die wiederverwertbar sind, und in Inhaltsstoffe, die Störstoffe darstellen, d.h. unerlaubte Inhaltsstoffe. Der Begriff "erlaubt" soll sich hierbei darauf beziehen, dass die betreffenden Inhaltsstoffe ordnungsgemäß in einen dafür vorgesehenen Abfallbehälter 16 einsortiert worden sind, um einer zu deren Verwertung vorgesehenen Sammelstelle zugeführt zu werden. Bei den Störstoffen handelt es sich hingegen um solche Inhaltsstoffe, die nicht ordnungsgemäß einsortiert worden sind und daher an der vorgesehenen Sammelstelle nicht verwertet werden können.

Beispielhaft sei dies anhand von Bioabfall erläutert. Bekanntlich existieren spezielle Biotonnen zur Sammlung von überwiegend kompostierbarem Abfall, der generell als Bioabfall bezeichnet wird, und zur Trennung desselben von anderen Arten von Abfall, die in anderen Abfallbehältern gesammelt werden. Für eine Biotonne ist somit Bioabfall ein erlaubter Inhaltsstoff, während andere Abfälle Störstoffe darstellen. Der Inhalt 24 des Abfallbehälters 16 aus Fig. 2 besteht überwiegend aus Bioabfall 26, jedoch ist in der Draufsicht ein Fremdkörper sichtbar, nämlich beispielhaft eine Glasflasche 28, die einen Störstoff darstellt.

Das Entsorgungsfahrzeug 10 umfasst eine nicht näher dargestellte Datenverarbeitungseinheit zur Analyse der Bilder der ersten Kamera 18, wobei die Analyse eine Klassifizierung der Bilder nach Inhaltsstoffen mittels eines neuronalen Netzwerks umfasst, in diesem Fall eines gefalteten neuronalen Netzwerks oder "Convolutional Neural Network" (CNN). Hierdurch können die Bilder der ersten Kamera 18 nach Inhaltsstoffen klassifiziert werden. Das Bild der ersten Kamera 18 aus Fig. 2 kann beispielsweise nach dem Inhaltsstoff (Störstoff) "Glas" zugeordnet bzw. klassifiziert werden, da in ihm der entsprechende Störstoff identifiziert worden ist. Eine solche Klassifikation kann aber auch darauf beschränkt sein, das dargestellte Bild danach zu klassifizieren, ob es einen Störstoff enthält oder nicht, ohne dass die Art eines vorhandenen Störstoffs (also hier: Glas) identifiziert wird. Auf diese Weise ist es möglich, zumindest die Existenz von Störstoffen im gesamten Inhalt eines Abfallbehälters 16 in dessen Aufnahmeposition an der Entleerungseinrichtung 14 zu erkennen.

Wird ein Bild derart klassifiziert, dass es mindestens einem Störstoff enthält, wird der Abfallbehälter 16, dessen Inhalt 24 gebildet ist, als kontaminiert erkannt. Es ist dann möglich, über die weitere Handhabung dieses kontaminierten Abfallbehälters 16 zu entscheiden. Denkbar ist beispielsweise, in Fall der Erkennung eines kontaminierten Abfallbehälters 16 aufgrund des von der ersten Kamera 18 aufgenommenen Bildes ein Signal durch die Datenverarbeitungseinheit an die Entleerungseinrichtung 14 zu übermitteln, durch welches keine Bewegung des kontaminierten Abfallbehälters 16 in die Entleerungsposition stattfindet oder verhindert wird. Es findet somit verhindert, dass kontaminierter, mit Störstoffen versetzter Inhalt 24 zu dem bereits im Abfallsammelraum 12 befindlichen Abfall gelangt und sich mit diesem vermischt. Stattdessen kann die Entleerung des kontaminierten Abfallbehälters 16 verweigert werden. Das Beenden oder Verhindern der Bewegung des Abfallbehälters 16 in die Entleerungsposition wird auch als "Schüttungsstopp" bezeichnet.

Aus der Position in Fig. 1 lässt sich der Abfallbehälter 16 durch die Entleerungseinrichtung 14 in die in Fig. 3 dargestellte Entleerungsposition befördern, in welcher der Abfallbehälter 16 gekippt ist und sein Inhalt 24 in den Abfallsammelraum 12 geleert wird. Während der Entleerung fällt der Inhalt 24 frei in den Abfallsammelraum 12. Eine im Bereich der Entleerungseinrichtung 14 unterhalb der Entleerungsposition angeordnete zweite Kamera 30 ist dazu eingerichtet, Bilder des Inhalts 24 des Abfallbehälters 16 während der Entleerung aufzunehmen, insbesondere eine Folge von Bildern, wie etwa eine Videosequenz. Auch die Bilder der zweiten Kamera 30 lassen sich - wie die Bilder der ersten Kamera 18 - durch die Datenverarbeitungseinheit einer Analyse mittels des neuronalen Netzwerks unterziehen, derart, dass die Bilder der zweiten Kamera 30 nach erkannten Inhaltsstoffen klassifiziert werden, d.h. nach erlaubten Inhaltsstoffen und Störstoffen. Auch in diesem Fall werden eines oder mehrere Bilder nach Inhaltsstoffen klassifiziert, und dann, wenn das bzw. die Bilder einen Störstoff enthalten, wird der Abfallbehälter 16 als kontaminiert erkannt und entsprechend weiter gehandhabt.

Die zweite Kamera 30 erkennt z.B. in einer aufgenommenen Bildsequenz die in Fig. 2 dargestellte Glasflasche 28 als Störstoff im freien Fall während der Entleerung und das bzw. die Bilder der zweiten Kamera 30 werden entsprechend klassifiziert. Auch wenn der Inhalt 24 des kontaminierten Abfallbehälters 16 dann bereits zu dem Inhalt 32 bereits erfolgter Leerungen vorhergehender Abfallbehälter innerhalb des Abfallsammelraums 12 gelangt ist, ist die Analyse der Bilder der zweiten Kamera 30 von Nutzen. Sie dienen dazu, aus dem Störstoffanteil des Inhalts eines kontaminierten Abfallbehälters 16 und den Störstoffanteilen bereits erfolgter Leerungen anderer Abfallbehälter einen kumulierten Störstoffanteil des gesamten Inhalts 32 des Abfallsammelraums 12 zu ermitteln.

Bei diesen Störstoffanteilen kann es sich beispielsweise um Volumenanteile des Störstoffs am Inhalt 32 handeln. Dieser kann aus den aufgenommenen Bildern gegebenenfalls geschätzt, also zumindest näherungsweise bestimmt werden. Unter Umständen kann ein oberer Grenzwert für einen zulässigen kumulierten Störstoffanteil des Inhalts 32 des Abfallsammelraums 12 festgesetzt werden. Wird dieser Grenzwert überschritten, so kann dies der Besatzung des Entsorgungsfahrzeugs 12 signalisiert werden, so dass entschieden werden kann, ob der Inhalt des Abfallsammelraums 12 einer vorgesehenen Sammelstelle zugeführt wird, z.B. einer Kompostieranlage für Bioabfall, oder einer anderen Sammelstelle, an welcher der gesammelte Abfall auf andere Weise gehandhabt wird.

Unter Umständen ist die Datenverarbeitungseinheit dazu eingerichtet, aus dem Anteil der Leerungen kontaminierter Abfallbehälter 16 an der gesamten Anzahl bereits erfolgter Leerungen einen kumulierten Störstoffanteil des Inhalts des Abfallsammelraums 12 zu ermitteln. In diesem Fall wird lediglich ermittelt, wie viele kontaminierte Abfallbehälter geleert wurden und diese Zahl wird ins Verhältnis zur Gesamtzahl der bereits erfolgten Leerungen gesetzt. Auch hieraus lässt sich der Kontaminationsgrad des Inhalts des Abfallsammelraums 12 zumindest näherungsweise ermitteln. Diese Vorgehensweise ist eventuell einfacher durchzuführen.

Das Entsorgungsfahrzeug 12 umfasst ferner Mittel zur Ermittlung seines geografischen Standorts, nämlich einen GPS (Global Positioning System)-Empfänger 34, durch welchen entsprechende Standortdaten erzeugt werden können. Die Datenverarbeitungseinheit ist dazu eingerichtet, diese Standortdaten mit der Kennung des Abfallbehälters 16 zu verknüpfen. Auf diese Weise kann der Standort eines Abfallbehälters 16 ermittelt werden, sofern die Standortdaten der Kennung eines mit dem Entsorgungsfahrzeug 10 gekoppelten Abfallbehälters 16 zugeordnet werden. Des Weiteren können die Standortdaten und die Kennung eines Abfallbehälters 16 Daten zugeordnet werden, die den Störstoffanteil im Inhalt 24 eines jeweiligen Abfallbehälters 16 repräsentieren. Die Orte, in denen sich Abfallbehälter 16 befinden, lassen sich somit mit den Störstoffanteilen in ihren Inhalten 24 verknüpfen. Werden die Standortdaten und damit verknüpfte Kennungen von Abfallbehältern 16 zusammen mit den jeweiligen Störstoffanteilen der Inhalte der Abfallbehälter 16 an eine zentrale Datenverwaltungseinheit übermittelt, wie sie im vorliegenden Abfallentsorgungssystem enthalten sein kann, so lässt sich von dieser zentralen Datenverwaltungseinheit eine geografische Dichteverteilung der Störstoffanteile ermitteln, d.h. es lassen sich beispielsweise Regionen bestimmen, in welchen die Störstoffanteile in den darin positionierten Abfallbehältern 16 höher sind als in anderen Regionen. Somit lässt sich eine Art "Heatmap" der Störstoffanteile erzeugen und visualisieren.

Eine solche Kartierung der Störstoffanteile kann dazu dienen, die Abfallverursacher in Regionen mit erhöhtem Aufkommen an Störstoffen in den Inhalten ihrer Abfallbehälter 16 gezielt anzusprechen, d.h. besser über die Abfalltrennung zu informieren oder eine verbesserte Abfalltrennung anzumahnen, etwa durch personalisierte Anschreiben. Den Anschreiben lassen sich auch die von der ersten Kamera 18 oder der zweiten Kamera 30 aufgenommenen Bilder des Inhalts 24 des kontaminierten Abfallbehälters 16 hinzufügen.

Somit können aufgrund der Kartierung des Störstoffaufkommens Maßnahmen eingeleitet werden, die die Abfallqualität im Hinblick auf eine Wiederverwertbarkeit nutzbarer Inhaltsstoffe steigern. Es kommen auch andere Maßnahmen wie z.B. verstärkte Kontrollen der Abfallbehälter 16 vor der Entleerung in Betracht.

Die zentrale Datenverwaltungseinheit kann eventuell ausgestattet sein, das Ergebnis der Analyse der von der ersten Kamera 18 oder der zweiten Kamera 30 aufgenommenen Bilder des Inhalts 24 eines Abfallbehälters 16 durch eine ergänzende Analyse zu verifizieren. Wird z.B. ein Abfallbehälter 16 aufgrund der Analyse eines Bildes der ersten Kamera 18 (und/oder mehrerer Bilder der zweiten Kamera 30) durch die Datenverarbeitungseinheit des Entsorgungsfahrzeugs 10 mittels eines ersten neuronalen Netzwerks als kontaminiert erkannt, kann die zentrale Datenverwaltungseinheit 38, der dieses Bild bzw. diese Bilder übermittelt worden ist bzw. sind, eine weitere Analyse mittels eines zweiten neuronalen Netzwerks vornehmen, um die Klassifizierung durch das erste neuronale Netzwerk zu verifizieren. Das erste neuronale Netzwerk und das zweite neuronale Netzwerk können sich unterscheiden. Lediglich im Fall einer positiven Verifikation, also einer Bestätigung des Ergebnisses, werden dann Maßnahmen wie personalisierte Anschreiben, verstärkte Kontrollen oder dergleichen vorgenommen, so dass über das abgespeicherte Bild und die Zuordnung über den RFID dem Bürger, d.h. dem Abfallverursacher eine Pönale auferlegt werden kann, bzw. dem Bürger eine Gebühr für eine zusätzliche Behandlung (Sortierung) des Abfalls berechnet werden kann.

Der Kontakt zwischen den Datenverarbeitungseinheiten, die in den Entsorgungsfahrzeugen 10 einer Flotte des Abfallentsorgungssystems verbaut sind, und einer zentralen Datenverwaltungseinheit, die ortsfest angeordnet ist, erfolgt drahtlos, z.B. über bekannte Mobilfunkstandards.

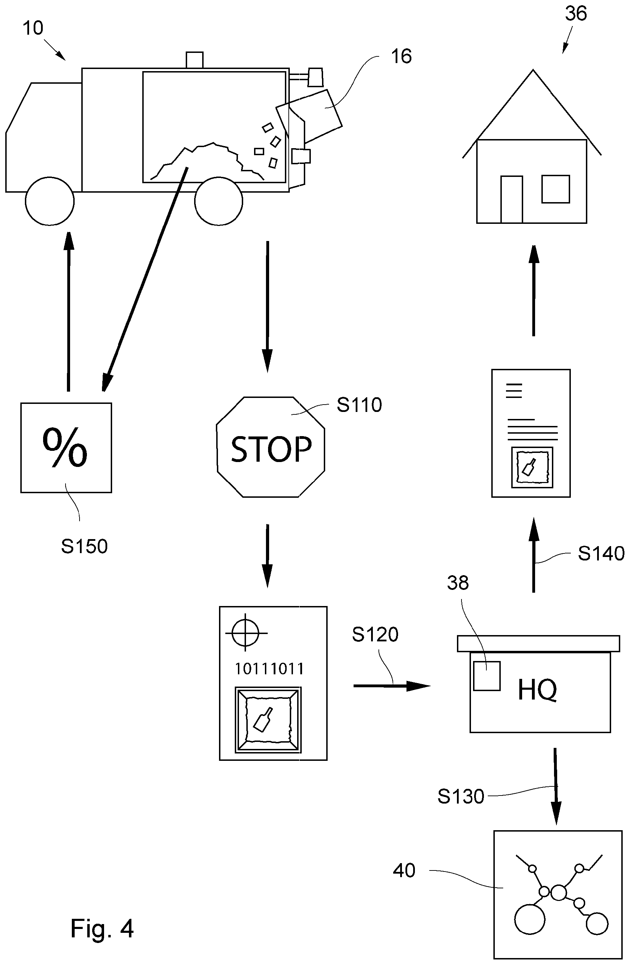

Das Schaubild in Fig. 4 zeigt den Ablauf eines erfindungsgemäßen Verfahrens zur Störstoffdetektion in Abfallbehältern anhand eines Abfallentsorgungssystems, welches das Entsorgungsfahrzeug 10 aus den Fig. 1 und 3 umfasst.

Wird ein Abfallbehälter 16 eines Haushalts 36 in die Aufnahmeposition der Entleerungseinrichtung 14 des Entsorgungsfahrzeugs 10 gebracht, nimmt die erste Kamera 18 ein Bild des Inhalts 24 des Abfallbehälters 16 auf (siehe Fig. 2). Die Datenverarbeitungseinheit des Entsorgungsfahrzeugs 10 analysiert dieses Bild der ersten Kamera 18 und klassifiziert dieses nach Inhaltsstoffen mit Hilfe eines neuronalen Netzwerks, wie oben beschrieben.

Ist im Bild ein Störstoff 28 enthalten und wird das Bild der ersten Kamera 18 entsprechend klassifiziert, wird der Abfallbehälter 16 als kontaminiert erkannt und ein Schüttungsstopp wird durchgeführt (Schritt S 110). Eine Bewegung des Abfallbehälters 16 in die Entleerungsposition wird nicht durchgeführt. Stattdessen wird der Störstoffanteil des Inhalts 24 des kontaminierten Abfallbehälters 16 durch die Datenverarbeitungseinheit des Entsorgungsfahrzeugs 10 ermittelt und gemeinsam mit Standortdaten, die den geografischen Standort des Entsorgungsfahrzeugs 10 mit dem darin aufgenommenen Abfallbehälter 16 repräsentieren, und einer ebenfalls ermittelten Kennung des Abfallbehälters 16 drahtlos an eine zentrale Datenverwaltungseinheit 38 in einer Zentrale (HQ) gesendet (Schritt S120).

Aus den Standortdaten verschiedener Entsorgungsfahrzeuge 10, den damit verknüpften Kennungen von Abfallbehältern 16 und den Störstoffanteilen der Inhalte 24 dieser Abfallbehälter 16 kann die Datenverwaltungseinheit 38 eine geografische Dichteverteilung 40 der Störstoffanteile ermitteln (Schritt S130).

Ferner können wiederum die einzelnen Abfallverursacher, nämlich die Haushalte 36, denen die Abfallbehälter 16 zugeordnet sind, individuell von der Zentrale kontaktiert werden, beispielsweise mittels eines Anschreibens, und positiv oder negativ sanktioniert werden. Beispielsweise ist es möglich, die Haushalte 36 mit zusätzlichen Informationen über die korrekte Abfalltrennung zu versorgen, diesbezüglich eine Verhaltensverbesserung anzumahnen oder dergleichen, eventuell zusammen mit Belegen über die ermittelten Störstoffe 28 im Inhalt 24 in Form von Fotos der Kameras 18 oder 30 (Schritt S140). Dies kann automatisiert mittels der Datenverwaltungseinheit 38 geschehen.

Während der Inhalt eines Abfallbehälters 16 in den Abfallsammelraum 12 geleert wird, kann darüber hinaus die zweite Kamera 30 Bilder des Inhalts des Abfallbehälters 16 aufnehmen, wie oben beschrieben, und der Störstoffanteil des Inhalts 24 eines kontaminierten Abfallbehälters 16 kann durch die Datenverarbeitungseinheit des Entsorgungsfahrzeugs 10 ermittelt werden. Zur Leerung eines kontaminierten Abfallbehälters 16 kann es z.B. dann kommen, wenn die Kontamination in der Draufsicht gemäß Fig. 2 durch die erste Kamera 18 nicht erkannt wird, etwa wenn ein Störstoff 28 im Inhalt 24 des Abfallbehälters 16 verborgen ist und daher kein Schüttungsstopp ausgelöst wird.

Werden mehrere Abfallbehälter 16 in den Abfallsammelraum 12 nacheinander entleert, so kann aus den ermittelten Störstoffanteilen dieser bereits erfolgten Leerungen mehrerer Abfallbehälter 16 ein kumulierter Störstoffanteil des gesamten Inhalts des Abfallsammelraums 12 ermittelt werden (Schritt S150). Dieser kumulierte Störstoffanteil kann mittels einer Anzeige der Besatzung des Entsorgungsfahrzeugs 10 mitgeteilt werden, so dass beispielsweise reagiert werden kann, wenn der kumulierte Störstoffanteil zu hoch wird, insbesondere einen vorgegebenen Grenzwert überschreitet. Bei dem kumulierten Störstoffanteil kann es sich beispielsweise um die Angabe einer prozentualen Kontamination handeln. Die Besatzung kann dann entscheiden, ob das Entsorgungsfahrzeug 10 zu einer vorgesehenen Sammelstelle fährt, in welcher die erlaubten Inhaltsstoffe verwertet werden (z.B. im Fall einer Sammlung von biologischem Abfall in einer Kompostieranlage) oder ob im Fall eines zu hohen kumulierten Störstoffanteils der Inhalt des Abfallsammelraums 12 alternativ entsorgt wird, z.B. in einer Müllverbrennungsanlage.

Auch die einzelnen Störstoffanteile der Inhalte der Abfallbehälter 16, die durch Bilder der zweiten Kamera 30 ermittelt werden, werden mit den individuellen Kennungen der Abfallbehälter 16 verknüpft, um die individuelle Kontamination der Abfallbehälter 16 den Abfallverursachern, also den Haushalten 36 zuordnen zu können. Die Kennungen der Abfallbehälter 16 werden mit den Standortdaten des Entsorgungsfahrzeugs 10 verknüpft und wiederum den jeweiligen Störstoffanteilen der Abfallbehälter 16 zugeordnet. Die Datenverarbeitungseinheit des Entsorgungsfahrzeugs 10 kann dann die Standortdaten, die damit verknüpften Kennungen der Abfallbehälter 16 und die jeweiligen Störstoffanteile an die zentrale Datenverwaltungseinheit 38 senden, analog zu Schritt S120. Wie bereits oben im Zusammenhang mit der ersten Kamera 18 beschrieben, kann diese dann die Haushalte 36, denen die Abfallbehälter 16 zugeordnet sind, individuell kontaktieren und z.B. Informations- oder Mahnschreiben verschicken.

Die zentrale Datenverwaltungseinheit 38 kann gegebenenfalls die Bilder, die ihr von der ersten Kamera und/oder der zweiten Kamera 30 (zusammen mit den Standortdaten und den Kennungen der Abfallbehälter 16) zugesendet werden, einer zusätzlichen Analyse unterziehen, um die Ergebnisse der Analyse der Datenverarbeitungseinheit des Entsorgungsfahrzeugs 10 zu verifizieren. Analysiert beispielsweise die Datenverarbeitungseinheit des Entsorgungsfahrzeugs 10 ein Bild der ersten Kamera 18 (und/oder mehrere Bilder der zweiten Kamera 30) mit Hilfe eines ersten neuronalen Netzwerks und erkennt einen Abfallbehälter 16 als kontaminiert, wird dieses Bild der ersten Kamera 18 (und/oder die Bilder der zweiten Kamera 30) an die zentrale Datenverwaltungseinheit 38 (zusammen mit den Standortdaten und der Kennung des als kontaminiert erkannten Abfallbehälters 16) gesendet, und die zentrale Datenverwaltungseinheit 38 analysiert dieses Bild der ersten Kamera 18 (und/oder die Bilder der zweiten Kamera 30) mit Hilfe eines zweiten neuronalen Netzwerks, um die Kontamination dieses Abfallbehälter 16, d.h. das Ergebnis der Analyse des ersten neuronalen Netzwerks zu verifizieren. Das erste ersten neuronale Netzwerk und das zweite neuronale Netzwerk können sich unterscheiden.

Zur Auswertung der ermittelten Störstoffanteile können also sowohl Daten der ersten Kamera 16 als auch Daten der zweiten Kamera 30 verwendet werden.

## Patentansprüche

1. Abfallentsorgungssystem zur Störstoffdetektion in Abfallbehältern (16), umfassend mindestens ein Entsorgungsfahrzeug (10) mit
- einem Abfallsammelraum (12),
- einer Entleerungseinrichtung (14), eingerichtet zur Aufnahme eines Abfallbehälters (16) in einer Aufnahmeposition und zum Bewegen desselben aus der Aufnahmeposition in eine Entleerungsposition, in welcher der Inhalt (24) des Abfallbehälters (16) in den Abfallsammelraum (12) geleert wird,
- sowie einem Kamerasystem, eingerichtet zur Erfassung des Inhalts (24) des Abfallbehälters (16),
das Kamerasystem umfasst eine erste Kamera (18) zur Aufnahme zumindest eines Bildes des Inhalts (24) des Abfallbehälters (16) in der Aufnahmeposition vor der Entleerung in einer Draufsicht und eine im Bereich der Entleerungseinrichtung (14) unterhalb der Entleerungsposition angeordnete zweite Kamera (30) zur Aufnahme einer Folge von Bildern des Inhalts (24) des Abfallbehälters (16) während der Entleerung,
wobei das Entsorgungsfahrzeug (10) ferner eine Datenverarbeitungseinheit zur Analyse von Bildern der ersten Kamera (18) und/oder der zweiten Kamera (30) umfasst,
wobei die Analyse eine Klassifizierung der Bilder nach Inhaltsstoffen mittels eines neuronalen Netzwerks umfasst, und
wobei die Datenverarbeitungseinheit dazu eingerichtet ist, die Bilder danach zu klassifizieren, ob ein Bild mindestens einen Störstoff (28) enthält oder nicht und dann, wenn ein Störstoff (28) enthalten ist, den Abfallbehälter (16), dessen Inhalt (24) abgebildet ist, als kontaminiert zu erkennen, und aufgrund der Analyse der Bilder einen Störstoffanteil des Inhalts (24) eines kontaminierten Abfallbehälters (16) zu ermitteln,
und im Fall der Erkennung der Überschreitung eines bestimmten Störstoffanteils in einem kontaminierten Abfallbehälter (16) aufgrund eines von der ersten Kamera (18) aufgenommenen Bildes ein Signal an die Entleerungseinrichtung (14) zu übermitteln, durch welches eine Bewegung dieses Abfallbehälters (16) in die Entleerungsposition beendet oder verhindert wird,
wobei das Entsorgungsfahrzeug (10) ferner Identifikationsmittel zur Ermittlung einer Kennung eines Abfallbehälters (16) umfasst, wobei die Kennung dazu eingerichtet ist, jeden einzelnen Abfallbehälter zu identifizieren, und einem Eigentümer als Abfallverursacher zuzuordnen,
wobei das Entsorgungsfahrzeug (10) ferner Mittel zur Ermittlung seines geografischen Standorts und zur Erzeugung entsprechender Standortdaten umfasst, und die Datenverarbeitungseinheit dazu eingerichtet ist, die Standortdaten mit der Kennung eines Abfallbehälters (16) zu verknüpfen,
wobei das Entsorgungsfahrzeug (10) ferner Mittel zur Kommunikation der Datenverarbeitungseinheit mit einer zentralen Datenverwaltungseinheit (38) umfasst,
und die Datenverarbeitungseinheit dazu eingerichtet ist, Standortdaten und damit verknüpfte Kennungen von Abfallbehältern (16) zusammen mit den jeweiligen Störstoffanteilen und Bildern der Inhalte (24) der Abfallbehälter (16) an die zentrale Datenverwaltungseinheit (38) zu senden.

2. Abfallentsorgungssystem gemäß Anspruch 1, **dadurch gekennzeichnet, dass** die Datenverarbeitungseinheit dazu eingerichtet ist, aus den ermittelten Störstoffanteilen bereits erfolgter Leerungen mehrerer Abfallbehälter (16) einen kumulierten Störstoffanteil des Inhalts des Abfallsammelraums (12) zu ermitteln.

3. Abfallentsorgungssystem gemäß einem der vorherigen Ansprüche, **dadurch gekennzeichnet, dass** die Datenverarbeitungseinheit dazu eingerichtet ist, aus dem Anteil der Leerungen kontaminierter Abfallbehälter (16) an der gesamten Anzahl bereits erfolgter Leerungen einen kumulierten Störstoffanteil des Inhalts (24) des Abfallsammelraums (12) zu ermitteln.

4. Abfallentsorgungssystem gemäß einem der vorherigen Ansprüche, **dadurch gekennzeichnet, dass** die zentrale Datenverwaltungseinheit (38) dazu eingerichtet ist, eine geografische Dichteverteilung (40) der Störstoffanteile zu ermitteln.

5. Abfallentsorgungssystem gemäß einem der vorherigen Ansprüche, **dadurch gekennzeichnet, dass** die zentrale Datenverwaltungseinheit (38) zur Analyse von Bildern der ersten Kamera (18) und/oder der zweiten Kamera (30) eingerichtet ist, wobei die Analyse eine Klassifizierung der Bilder nach erkannten Inhaltsstoffen mittels eines weiteren neuronalen Netzwerks umfasst.

6. Verfahren zur Störstoffdetektion in Abfallbehältern, umfassend die folgenden Schritte:
- Aufnahme eines Abfallbehälters (16) durch ein Entsorgungsfahrzeug (10) in eine Aufnahmeposition,
- Ermittlung einer Kennung eines Abfallbehälters (16), durch welche der Abfallbehälter (16) identifiziert wird, durch am Entsorgungsfahrzeug (10) vorgesehene Identifikationsmittel, wobei die Kennung dazu eingerichtet ist, jeden einzelnen Abfallbehälter zu identifizieren und einem Eigentümer als Abfallverursacher zuzuordnen,
- Ermittlung des geografischen Standorts des Entsorgungsfahrzeugs (10) und Verknüpfung von Standortdaten, die diesem geografischen Standort entsprechen, mit der Kennung eines Abfallbehälters (16),
- Aufnahme zumindest eines Bildes des Inhalts (24) des Abfallbehälters (16) in der Aufnahmeposition durch eine am Entsorgungsfahrzeug (10) vorgesehene erste Kamera (18) in einer Draufsicht,
- Bewegen des Abfallbehälters in eine Entleerungsposition, in welcher der Inhalt (24) des Abfallbehälters (16) in einen Abfallsammelraum des Entsorgungsfahrzeugs (10) geleert wird, und Aufnahme einer Folge von Bildern des Inhalts (24) des Abfallbehälters (16) während der Entleerung durch eine am Entsorgungsfahrzeug (10) vorgesehene zweite Kamera (30), die im Bereich der Entleerungseinrichtung (14) unterhalb der Entleerungsposition angeordnet ist,
- Analyse der Bilder der ersten Kamera (18) und/oder der zweiten Kamera (30) durch eine Datenverarbeitungseinheit im Entsorgungsfahrzeug (10), umfassend eine Klassifizierung der Bilder nach Inhaltsstoffen mittels eines neuronalen Netzwerks, wobei die Bilder danach klassifiziert werden, ob ein Bild mindestens einen Störstoff (28) enthält oder nicht, wobei dann, wenn ein Störstoff (28) enthalten ist, der Abfallbehälter (16), dessen Inhalt (24) abgebildet ist, als kontaminiert erkannt wird,
- Ermittlung eines Störstoffanteils des Inhalts (24) eines kontaminierten Abfallbehälters (16) durch die Datenverarbeitungseinheit aufgrund der Analyse der Bilder,
- im Fall der Erkennung der Überschreitung eines bestimmten Störstoffanteils in einem kontaminierten Abfallbehälters (16) aufgrund eines von der ersten Kamera (18) aufgenommenen Bildes: Übermittlung eines Signals an die Entleerungseinrichtung (14), durch welches eine Bewegung dieses Abfallbehälters (16) in die Entleerungsposition beendet oder verhindert wird,
- Senden der Standortdaten und damit verknüpfter Kennungen von Abfallbehältern (16) zusammen mit den jeweiligen Störstoffanteilen und Bildern der Inhalte (24) der Abfallbehälter (16) von der Datenverarbeitungseinheit an eine ortsfeste zentrale Datenverwaltungseinheit (38).

7. Verfahren gemäß Anspruch 6, **dadurch gekennzeichnet, dass** aus den ermittelten Störstoffanteilen bereits erfolgter Leerungen mehrerer Abfallbehälter (16) ein kumulierter Störstoffanteil des Inhalts des Abfallsammelraums (12) ermittelt wird.

8. Verfahren gemäß einem der Ansprüche 6 oder 7, **dadurch gekennzeichnet, dass** aus dem Anteil der Leerungen kontaminierter Abfallbehälter (16) an der gesamten Anzahl bereits erfolgter Leerungen ein kumulierter Störstoffanteil des Inhalts (24) des Abfallsammelraums (12) ermittelt wird.

9. Verfahren gemäß einem der Ansprüche 6 bis 8, **dadurch gekennzeichnet, dass** die Datenverwaltungseinheit (38) dazu eingerichtet ist, eine geografische Dichteverteilung (40) der Störstoffanteile zu ermitteln.

10. Verfahren gemäß einem der Ansprüche 6 bis 9, **dadurch gekennzeichnet, dass** die zentrale Datenverwaltungseinheit (38) eine Analyse der Bilder der ersten Kamera (18) und/oder der zweiten Kamera (30), umfassend eine Klassifizierung der Bilder nach erkannten Inhaltsstoffen, mittels eines weiteren neuronalen Netzwerks vornimmt, um das Ergebnis der Analyse dieser Bilder durch das neuronale Netzwerk des Entsorgungsfahrzeugs (10) zu verifizieren.

## Claims

1. Waste disposal system for detecting contaminants in waste containers (16), comprising at least one disposal vehicle (10) with
- a waste collection chamber (12),
- an emptying device (14), configured to receive a waste container (16) in a receiving position and to move it from the receiving position to an emptying position, in which the contents (24) of the waste container (16) are emptied into the waste collection chamber (12),
- and a camera system, configured to capture the contents (24) of the waste container (16), the camera system comprising a first camera (18) for capturing at least one image of the contents (24) of the waste container (16) in a top view in the receiving position before emptying and a second camera (30) arranged in the area of the emptying device (14) below the emptying position for capturing a series of images of the contents (24) of the waste container (16) during the emptying process,
wherein the disposal vehicle (10) further comprises a data processing unit for analyzing images from the first camera (18) and/or the second camera (30),
wherein the analysis includes a classification the images according to contents using a neural network, and
wherein the data processing unit is configured to classify the images based on whether an image contains at least one contaminant (28) or not and, if a contaminant (28) is present, to identify the waste container (16) whose contents (24) are depicted as contaminated, and based on the analysis of the images, to determine a contaminant proportion of the contents (24) of a contaminated waste container (16),
and in the event of detecting an exceeding of a certain contaminant proportion in a contaminated waste container (16) based on an image taken by the first camera (18), to send a signal to the emptying device (14) by which the movement of this waste container (16) to the emptying position is stopped or prevented,
wherein the disposal vehicle (10) further comprises identification means for determining an identifier of a waste container (16), wherein the identifier is configured to identify each individual waste container and to assign it to an owner as the waste producer;
wherein the disposal vehicle (10) further comprises means for determining its geographic location and for generating corresponding location data, and the data processing unit is configured to link the location data with the identifier of a waste container (16);
wherein the disposal vehicle (10) further comprises means for communicating the data processing unit with a central data management unit (38),
and the data processing unit is configured to send location data and identifiers of waste containers (16) linked therewith together with the respective contaminant proportions and images of the contents (24) of the waste containers (16) to the central data management unit (38).

2. Waste disposal system according to claim 1, **characterized in that** the data processing unit is configured to determine a cumulative contaminant proportion of the contents of the waste collection chamber (12) from the determined contaminant proportions of multiple waste containers (16) that have already been emptied.

3. Waste disposal system according to any of the previous claims, **characterized in that** the data processing unit is configured to determine a cumulative contaminant proportion of the contents (24) of the waste collection chamber (12) from the proportion of emptyings of contaminated waste containers (16) relative to the total number of emptyings that have already taken place.

4. Waste disposal system according to any of the previous claims, **characterized in that** the central data management unit (38) is configured to determine a geographical density distribution (40) of the contaminant proportions.

5. Waste disposal system according to any of the previous claims, **characterized in that** the central data management unit (38) is configured to analyze images from the first camera (18) and/or the second camera (30), wherein the analysis includes classifying the images based on identified contents using another neural network.

6. Method for detecting contaminants in waste containers, comprising the following steps:
- receiving a waste container (16) by a disposal vehicle (10) in a receiving position,
- determining an identifier of a waste container (16), by which the waste container (16) is identified, through identification means provided on the disposal vehicle (10), wherein the identifier is configured to identify each individual waste container and assign it with an owner as the waste producer,
- determining the geographical location of the disposal vehicle (10) and linking location data corresponding to the geographical location with the identifier of a waste container (16),
- capturing at least one image of the contents (24) of the waste container (16) in the receiving position through a first camera (18) provided on the disposal vehicle (10) from a top view,
- moving the waste container to an emptying position, in which the contents (24) of the waste container (16) are emptied into a waste collection chamber of the disposal vehicle (10), and capturing a sequence of images of the contents (24) of the waste container (16) during emptying by a second camera (30) provided on the disposal vehicle (10) located in the area of the emptying device (14) below the emptying position,
- analyzing the images from the first camera (18) and/or the second camera (30) by a data processing unit in the disposal vehicle (10), including a classification of the images by contents using a neural network, wherein the images are classified according to whether an image contains at least one contaminant (28) or not, and if a contaminant (28) is present, to identify the waste container (16), whose contents (24) are depicted, as contaminated,
- determining a contaminant proportion of the contents (24) of a contaminated waste container (16) by the data processing unit based on the analysis of the images,
- in the event of detecting the exceeding of a certain contaminant proportion in a contaminated waste container (16) based on an image captured by the first camera (18): sending a signal to the emptying device (14), by which the movement of this waste container (16) to the emptying position is stopped or prevented,
- sending the location data and identifiers of waste containers (16) linked therewith along with the respective contaminant proportions and images of the contents (24) of the waste containers (16) from the data processing unit to a stationary central data management unit (38).

7. Method according to claim 6, **characterized in that** the cumulative contaminant proportion of the contents of the waste collection chamber (12) is determined from the determined contaminant proportions of multiple waste containers (16) that have already been emptied.

8. Method according to any of claims 6 or 7, **characterized in that** the cumulative contaminant proportion of the contents (24) of the waste collection chamber (12) is determined from the proportion of emptyings of contaminated waste containers (16) relative to the total number of emptyings that have already taken place.

9. Method according to any of claims 6 to 8, **characterized in that** the data management unit (38) is configured to determine a geographical density distribution (40) of the contaminant proportions.

10. Method according to any of claims 6 to 9, **characterized in that** the central data management unit (38) performs an analysis of the images from the first camera (18) and/or the second camera (30), including a classification of the images by recognized contents, using another neural network to verify the analysis results of these images by the neural network of the disposal vehicle (10).

## Revendications

1. Système d'élimination de déchets pour la détection de contaminants dans des conteneurs de déchets (16), comprenant au moins un véhicule d'élimination (10) comportant :
un espace de collecte de déchets (12),
un dispositif de déchargement (14), conçu pour recevoir un conteneur de déchets (16) dans une position de réception et pour déplacer celui-ci de la position de réception à une position de déchargement, dans laquelle le contenu (24) du conteneur de déchets (16) est déchargé dans l'espace de collecte de déchets (12),
ainsi qu'un système de caméras conçu pour détecter le contenu (24) du conteneur de déchets (16),
le système de caméras comprenant une première caméra (18) pour enregistrer au moins une image du contenu (24) du conteneur de déchets (16) dans la position de réception avant le déchargement dans une vue de dessus, et une seconde caméra (30) agencée dans la zone du dispositif de déchargement (14) en dessous de la position de déchargement pour enregistrer une séquence d'images du contenu (24) du conteneur de déchets (16) pendant le déchargement,
dans lequel le véhicule d'élimination (10) comprend en outre une unité de traitement de données pour analyser des images de la première caméra (18) et/ou de la seconde caméra (30),
dans lequel l'analyse comprend une classification, au moyen d'un réseau neuronal, des images en fonction des matières contenues, et
dans lequel l'unité de traitement de données est conçue pour classer les images selon qu'une image contient ou non au moins un contaminant (28) et ensuite, si un contaminant (28) est présent, le conteneur de déchets (16) dont le contenu (24) est représenté, pour l'identifier comme étant contaminé et, sur la base de l'analyse des images, pour déterminer une fraction de contaminants du contenu (24) d'un conteneur de déchets contaminé (16),
et, en cas d'identification du dépassement d'une fraction de contaminants déterminée dans un conteneur de déchets contaminé (16), pour transmettre un signal au dispositif de déchargement (14) sur la base d'une image enregistrée par la première caméra (18), signal au moyen duquel un mouvement de ce conteneur de déchets (16) jusqu'à la position de déchargement est arrêté ou empêché,
dans lequel le véhicule d'élimination (10) comprend en outre des moyens d'identification pour déterminer un identifiant d'un conteneur de déchets (16), dans lequel l'identifiant est conçu pour identifier chaque conteneur de déchets individuel et pour affecter un propriétaire en tant que producteur de déchets,
dans lequel le véhicule d'élimination (10) comprend en outre des moyens pour déterminer sa position géographique et pour générer des données de position correspondantes, et l'unité de traitement de données est configurée pour associer les données de position à l'identifiant d'un conteneur de déchets (16),
dans lequel le véhicule d'élimination (10) comprend en outre des moyens pour faire communiquer l'unité de traitement de données avec une unité centrale de gestion de données (38),
et l'unité de traitement de données est configurée pour envoyer à l'unité centrale de gestion de données (38), des données de position et des identifiants associés de conteneurs de déchets (16) conjointement avec les fractions de contaminants respectives et des images du contenu (24) des conteneurs de déchets (16).

2. Système d'élimination de déchets selon la revendication 1, **caractérisé en ce que** l'unité de traitement de données est conçue pour déterminer, à partir des fractions de contaminants déterminées de déchargements déjà effectués de plusieurs conteneurs de déchets (16), une fraction cumulée de contaminants du contenu de l'espace de collecte de déchets (12).

3. Système d'élimination de déchets selon l'une des revendications précédentes, **caractérisé en ce que** l'unité de traitement de données est conçue pour déterminer, à partir de la fraction des déchargements de conteneurs de déchets contaminés (16) par rapport au nombre total de déchargements déjà effectués, une fraction cumulée de contaminants du contenu (24) de l'espace de collecte de déchets (12).

4. Système d'élimination de déchets selon l'une des revendications précédentes, **caractérisé en ce que** l'unité centrale de gestion de données (38) est conçue pour déterminer une répartition de densité géographique (40) des fractions de contaminants.

5. Système d'élimination de déchets selon l'une des revendications précédentes, **caractérisé en ce que** l'unité centrale de gestion de données (38) est configurée pour analyser des images de la première caméra (18) et/ou de la seconde caméra (30), dans lequel l'analyse comprend une classification, au moyen d'un réseau neuronal supplémentaire, des images en fonction de matières contenues identifiées.

6. Procédé de détection de contaminants dans des conteneurs de déchets, comprenant les étapes suivantes consistant à :
recevoir un conteneur de déchets (16) par un véhicule d'élimination (10) dans une position de réception,
déterminer un identifiant d'un conteneur de déchets (16), au moyen duquel le conteneur de déchets (16) est identifié, par des moyens d'identification prévus sur le véhicule d'élimination (10), dans lequel l'identifiant est conçu pour identifier chaque conteneur de déchets individuel et pour affecter un propriétaire en tant que producteur de déchets,
déterminer la position géographique du véhicule d'élimination (10) et associer des données de position qui correspondent à cette position géographique à l'identifiant d'un conteneur de déchets (16),
enregistrer au moins une image du contenu (24) du conteneur de déchets (16) dans la position de réception par une première caméra (18) prévue sur le véhicule d'élimination (10) dans une vue de dessus,
déplacer le conteneur de déchets jusqu'à une position de déchargement, dans laquelle le contenu (24) du conteneur de déchets (16) est déchargé dans un espace de collecte de déchets du véhicule d'élimination (10), et enregistrer une séquence d'images du contenu (24) du conteneur de déchets (16) pendant le déchargement par une seconde caméra (30) prévue sur le véhicule d'élimination (10), qui est agencée dans la zone du dispositif de déchargement (14) au-dessous de la position de déchargement,
analyser les images de la première caméra (18) et/ou de la seconde caméra (30) par une unité de traitement de données dans le véhicule d'élimination (10), l'analyse comprenant une classification, au moyen d'un réseau neuronal, des images en fonction des matières contenues, dans lequel les images sont classées selon qu'une image contient ou non au moins un contaminant (28), dans lequel si un contaminant (28) est présent, le conteneur de déchets (16) dont le contenu (24) est représenté, est alors identifié comme étant contaminé,
déterminer une fraction de contaminants du contenu (24) d'un conteneur de déchets contaminé (16) par l'unité de traitement de données sur la base de l'analyse des images,
en cas d'identification du dépassement d'une fraction de contaminants déterminée dans un conteneur de déchets contaminé (16) sur la base d'une image capturée par la première caméra (18) : transmettre un signal au dispositif de déchargement (14), signal par lequel un mouvement de ce conteneur de déchets (16) jusqu'à la position de déchargement est arrêté ou empêché,
envoyer à une unité centrale de gestion des données fixe (38), les données de position et les identifiants associés des conteneurs de déchets (16) conjointement avec les matières contenues respectives et les images du contenu (24) des conteneurs de déchets (16) de l'unité de traitement des données.

7. Procédé selon la revendication 6, **caractérisé en ce qu'**à partir des fractions de contaminants déterminées de déchargements déjà effectués de plusieurs conteneurs de déchets (16), une fraction cumulée de contaminants du contenu de l'espace de collecte de déchets (12) est déterminée.

8. Procédé selon l'une des revendications 6 ou 7, **caractérisé en ce qu'**à partir de la fraction de déchargements de conteneurs de déchets contaminés (16) par rapport au nombre total de déchargements déjà effectués, une fraction cumulée de contaminants du contenu (24) de l'espace de collecte de déchets (12) est déterminée.

9. Procédé selon l'une des revendications 6 à 8, **caractérisé en ce que** l'unité de gestion de données (38) est conçue pour déterminer une répartition de densité géographique (40) des fractions de contaminants.

10. Procédé selon l'une des revendications 6 à 9, **caractérisé en ce que** l'unité centrale de gestion de données (38) effectue une analyse des images de la première caméra (18) et/ou de la seconde caméra (30), incluant une classification, au moyen d'un réseau neuronal supplémentaire, des images en fonction de matières contenues identifiées, afin de vérifier le résultat de l'analyse de ces images par le réseau neuronal du véhicule d'élimination (10).
